# EUROPÄISCHE PATENTSCHRIFT

(11) **EP 0 718 738 B1**
(45) Veröffentlichungstag und Bekanntmachung des Hinweises auf die Patenterteilung: **28.07.1999**
(21) Anmeldenummer: 95117970.4
(22) Anmeldetag: 15.11.1995
(51) Int. Cl.: G05D 23/00, G05D 23/19

(54) **Thermostatisches Arbeitselement mit einem elektrischen Widerstandsheizelement**
Thermostatic operational element with an electric resistive heating element
Elément fonctionnel thermostatique avec un élément chauffant à résistance électrique

(30) Priorität: 15.12.1994 DE 4444685
(43) Veröffentlichungstag der Anmeldung: 26.06.1996
(73) Patentinhaber: Behr Thermot-tronik GmbH & Co., 70806 Kornwestheim (DE)
(72) Erfinder: Saur, Roland, D-70195 Stuttgart (DE); Leu, Peter, D-73770 Denkendorf (DE); Kurz, Manfred, D-71254 Ditzingen (DE)
(74) Vertreter: Wilhelm & Dauster Patentanwälte European Patent Attorneys

(56) Entgegenhaltungen:
- US-A- 3 266 235
- US-A- 3 404 530
- PATENT ABSTRACTS OF JAPAN vol. 018, no. 067 (P-1686), 3.Februar 1994 & JP-A-05 281867 (CANON INC), 29.Oktober 1993,

## Beschreibung

Die Erfindung betrifft ein thermostatisches Arbeitselement mit einem Gehäuse, in welchem ein elektrisches Widerstandsheizelement angeordnet ist, dessen elektrische Anschlußdrähte dichtend durch den Boden des Gehäuses nach außen geführt sind.

Ein thermostatisches Arbeitselement der eingangs genannten Art wird insbesondere in Verbindung mit einem elektrisch beheizbaren Thermostatventil eingesetzt, wie dies beispielsweise aus der DE 42 33 913 A1 bekannt ist.

Der Erfindung liegt die Aufgabe zugrunde, ein thermostatisches Arbeitselement der eingangs genannten Art zu schaffen, das eine möglichst kurze Reaktionszeit besitzt und das sicher nach außen abgedichtet ist.

Diese Aufgabe wird dadurch gelöst, daß das Widerstandsheizelement einen Trägerkörper enthält, auf dem eine Widerstandsschicht aufgebracht ist, an die die Anschlußdrähte angelötet sind, und daß an den Trägerkörper im Bereich der Anschlußdrähte ein Sockel aus isolierendem Material angegossen ist, der die Anschlußdrähte umhüllt und der dichtend in dem Bodenbereich des Gehäuses angeordnet ist, und daß in das Innere des Gehäuses eine den Sockel zu dem Gehäuse abdichtende Dichtmasse eingebracht ist.

Bei dem erfindungsgemäßen thermostatischen Arbeitselement besitzt das Widerstandsheizelement eine relativ große Oberfläche, so daß ein guter Wärmeübergang von dem Widerstandsheizelement zu einem in dem Gehäuse untergebrachten Dehnstoff gegeben ist. Damit läßt sich eine relativ hohe Wärmeleistung kurzfristig in den Dehnstoff einleiten, ohne daß sehr hohe Temperaturen an dem Widerstandsheizelement auftreten, die zu einer Schädigung von anderen innerhalb des Gehäuses untergebrachten Elementen führen könnten, insbesondere einer sackartigen, gummielastischen Membrane. Mittels des Sockels und der Dichtmasse wird eine gute Dichtheit erreicht, so daß auch bei den auftretenden hohen Drücken das Austreten des Dehnstoffs aus dem Gehäuse sicher verhindert wird. Beispielsweise kann als Abdichtmasse ein Silikon vorgesehen werden. Damit wird sichergestellt, daß die gute Abdichtung auch über eine längere Betriebszeit aufrechterhalten bleibt.

In Ausgestaltung der Erfindung ist der Sockel mit einem die Anschlußdrähte umgebenden Ansatz versehen, der eine Öffnung des Bodens des Gehäuses durchdringt. Damit sind die Lötstellen entlastet, mit welchen die Anschlußdrähte an die Widerstandsschicht angelötet sind.

In weiterer Ausgestaltung der Erfindung ist der Sockel mit einem in das Gehäuse mit Preßsitz eingesetzten Ringbund versehen. Damit wird eine weitere unterstützende Dichtung erhalten, während außerdem das Widerstandsheizelement sicher in dem Gehäuse fixiert ist.

In weiterer Ausgestaltung der Erfindung wird vorgesehen, daß der Trägerkörper die Gestalt einer zentrisch zu dem Sockel ausgerichteten Platte besitzt.

Weitere Merkmale und Vorteile der Erfindung ergeben sich aus der nachfolgenden Beschreibung des in der Zeichnung dargestellten Ausführungsbeispiels.
- Fig. 1: zeigt einen Teilschnitt durch ein erfindungsgemäßes thermostatisches Arbeitselement und
- Fig. 2: eine Ansicht in Richtung des Pfeiles II auf das Widerstandsheizelement des thermostatischen Arbeitselementes.

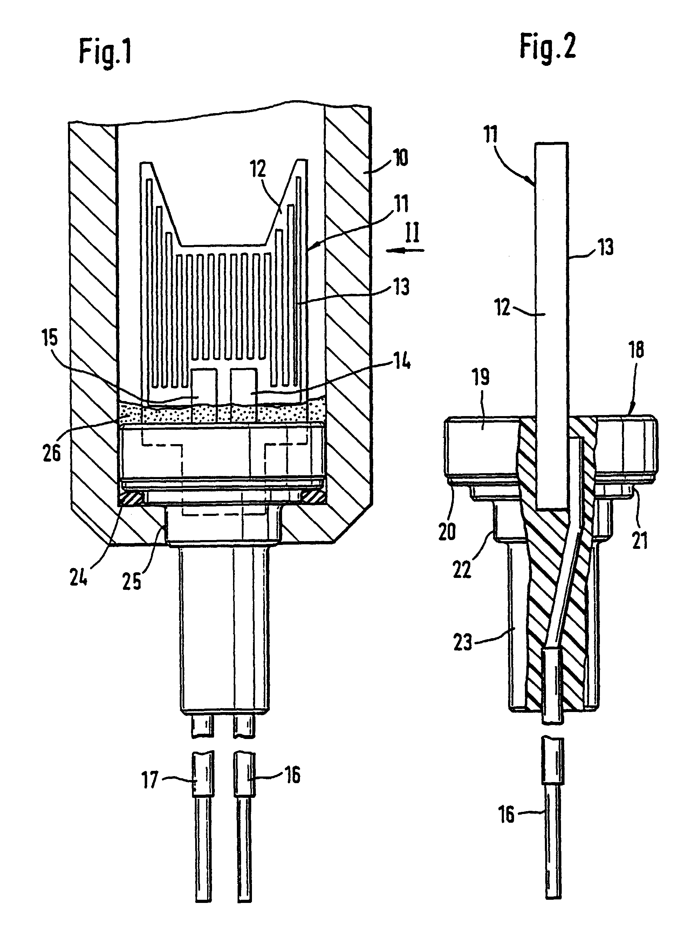

Das in Fig. 1 nur teilweise dargestellte metallische Gehäuse (10) ist im Bereich seiner nicht dargestellten offenen Seite mit einem Führungseinsatz für einen Arbeitskolben versehen. Mittels des Führungseinsatzes wird eine in das Gehäuse (10) hineinragende sackartige Membrane dichtend gehalten, in die ein Arbeitskolben eingesteckt ist. Dieser Aufbau ist beispielsweise aus der DE 42 33 913 A1 bekannt. Das Innere des Gehäuses (10) ist mit einem Dehnstoff befüllt, insbesondere einer Wachsmischung. Dieser Dehnstoff ändert temperaturabhängig sein Volumen, wobei bei einer Temperaturerhöhung der Arbeitskolben ausgetrieben wird und als Stellelement insbesondere für ein Thermostatventil dient.

Im Inneren des Gehäuses ist ein elektrisches Widerstandsheizelement (11) angeordnet, das von dem im Gehäuse (10) befindlichen Dehnstoff umgeben ist. Das Widerstandsheizelement (11) besitzt einen plattenförmigen Trägerkörper (12), der auf einer Seite mit einer mäanderförmig verlaufenden Widerstandsschicht (13) versehen. Der Trägerkörper (12) besteht beispielsweise aus einem eloxierten und damit isolierten Aluminium. Die Widerstandsschicht (13) ist auf dem Trägerkörper (12) beispielsweise mit Hilfe eines wärmebeständigen Klebers befestigt. Der Trägerkörper (12) ist ferner mit zwei Anschlußkontakten (14, 15) versehen, die mit der mäanderförmigen Widerstandsschicht (13) elektrisch leitend verbunden sind und an die jeweils ein Anschlußdraht (16, 17) angelötet ist.

An den Trägerkörper (12) ist ein Sockel (18) angespritzt, der den Bereich der Lötstellen verdeckt, mit denen die Anschlußdrähte (16, 17) an die Kontakte (14, 15) angeschlossen sind. Der Sockel (18) ist aus einem isolierenden Kunststoff hergestellt. Er besitzt einen Ringbund (19), der dem Innendurchmesser des zylindrischen Gehäuses (10) entspricht. Auf der dem Boden des Gehäuses (10) zugewandten Seite ist der Ringbund (19) mit einer Ansetzhilfe (20) versehen, mittels der der Sockel (18) beim Anbringen an dem Gehäuse (10) zentrierbar ist, wonach das Einpressen des Ringbundes (19) in das Gehäuse (10) erfolgt. Auf der dem Boden des Gehäuses (10) zugewandten Seite ist der Ringbund (19) mit einem Sitz (21) versehen, der einen Dichtungsring aufnimmt, insbesondere einen O-Ring (24). Dieser O-Ring (24) legt sich beim Einfügen des Sockels (18) in das Gehäuse (10) an die zylindrische Innenwand des Gehäuses (10) und an dessen Boden unter elatischer Deformation an. Nach diesem Dichtungssitz (21) besitzt der Sockel (18) einen im Durchmesser verringerten Ringbund (22), der einer Aussparung (25) im Boden des Gehäuses (10) angepaßt ist. An diesen Ringbund (22) schließt ein im wesentlichen zylindrischer Ansatz (23) an, der die Anschlußdrähte (16, 17) und auch deren Außenisolierung über einen Längenabschnitt umgibt.

Nachdem der Sockel (18) in das Gehäuse (10) eingesetzt ist, wird der Bereich des Sockels (18) mit einer Abdichtmasse (26) ausgegossen. Als Abdichtmasse (26) dient beispielsweise ein Silikon. Diese Abdichtmasse (26), die auch aus mehreren Komponenten gemischt werden kann, hat vorzugsweise auch dauerelastische Eigenschaften und hält sich klebend an dem Gehäuse (10) und dem Sockel (18).

Der plattenförmige Grundkörper (12), der auf einer Seite mit der Widerstandsschicht (13) versehen ist, ragt relativ weit in das Gehäuse (10) hinein. Sein dem Boden abgewandtes Ende ist V-förmig ausgespart, da in diesem Bereich das Ende der nicht dargestellten sackförmigen Membrane zu liegen kommt. Der Trägerkörper (12) kann beispielsweise auch aus Keramik hergestellt werden. In diesem Fall kann die mäanderförmig verlaufende elektrische Widerstandsschicht durch Aufdampfen aufgebracht werden. Die Widerstandsschicht (13) führt zu einer relativ großen Oberfläche, die von dem Dehnstoff umgeben ist. Dadurch ergibt sich ein entsprechend guter Wärmeübergang mit einer hohen Wärmeübertragungsfähigkeit. Es läßt sich somit eine relativ große Heizleistung realisieren, ohne daß die Temperatur der Widerstandsschicht selbst zu hohe Werte erreicht, d.h. eine Temperatur, die zur Schädigung anderer Teile führen könnte, beispielsweise der gummielastischen Sackmembran.

Bei einer abgewandelten Ausführungsform ist vorgesehen, daß der plattenförmige Trägerkörper (12) beidseits mit einer Widerstandsschicht (13) versehen ist, die zu parallelen Heizwiderständen geschaltet sind. Bei einer weiteren Ausführungsform werden zwei oder mehr Elemente als Trägerkörper (12) vorgesehen, die einseitig oder auch beidseitig mit einer Widerstandsschicht (13) versehen sind.

## Patentansprüche

1. Thermostatisches Arbeitselement mit einem Gehäuse, in welchem ein elektrisches Widerstandsheizelement angeordnet ist, dessen elektrische Anschlußdrähte dichtend durch den Boden des Gehäuses nach außen geführt sind, dadurch gekennzeichnet, daß das Widerstandsheizelement (11) einen Trägerkörper (12) enthält, auf dem eine Widerstandsheizschicht (13) aufgebracht ist, an die die Anschlußdrähte (16, 17) angelötet sind, daß an den Trägerkörper im Bereich der Anschlußdrähte ein Sockel (18) aus isolierendem Material angeformt ist, der die Anschlußdrähte umhüllt und der dichtend in dem Bodenbereich des Gehäuses (10) angeordnet ist, und daß in das Innere des Gehäuses eine den Sockel zu dem Gehäuse abdichtende Abdichtmasse (26) eingebracht ist.

2. Arbeitselement nach Anspruch 1, dadurch gekennzeichnet, daß die Abdichtmasse (26) auch den Bereich des Sockels (18) überdeckt, in welchem der Trägerkörper (12) aus dem Sockel herausragt.

3. Arbeitselement nach Anspruch 1 oder 2, dadurch gekennzeichnet, daß der Sockel (18) mit einem die Anschlußdrähte umgebenden Ansatz (22, 23) versehen ist, der eine Öffnung (25) des Bodens des Gehäuses (10) durchdringt.

4. Arbeitselement nach einem der Ansprüche 1 bis 3, dadurch gekennzeichnet, daß der Sockel (18) mit einem in das Gehäuse (10) mit Preßsitz eingesetzte Ringbund (19) versehen ist.

5. Arbeitselement nach einem der Ansprüche 1 bis 4, dadurch gekennzeichnet, daß der Sockel (18) auf der dem Boden des Gehäuses (10) zugewandten Seite mit einem Sitz (21) zur Aufnahme eines Dichtungsringes (24) versehen ist.

6. Arbeitselement nach einem der Ansprüche 1 bis 5, dadurch gekennzeichnet, daß der Trägerkörper (12) die Gestalt einer zentrisch zu dem Sockel (18) angeordneten Platte besitzt.

7. Arbeitselement nach einem der Ansprüche 1 bis 6, dadurch gekennzeichnet, daß der Trägerkörper aus zwei oder mehr Elementen besteht, die mittels des Sockels (18) gehalten sind.

8. Arbeitselement nach einem der Ansprüche 1 bis 7, dadurch gekennzeichnet, daß die Widerstandsschicht (3) mäanderförmig auf einer Seite des Trägerkörpers (12) angeordnet ist.

## Claims

1. A thermostatic working element with a housing in which an electrical heating resistance element is arranged, electric wires thereof being tightly sealed at the base of the housing through which they are fed to the exterior, characterised in that the resistance heating element (11) contains a substrate (12) to which a resistance heating layer (13) is applied, the wires (16, 17) being soldered thereto, in that a socket (18) made from an insulating material is moulded onto the substrate in the region of the wires, surrounding the wires, and is arranged so as to provide a seal in the base region of the housing (10), and in that a sealing compound (26) is poured into the interior of the housing to seal the socket to the housing.

2. A working element as claimed in claim 1, characterised in that the sealing compound (26) also covers the region of the socket (18) from which the substrate (12) projects out from the socket.

3. A working element as claimed in claim 1 or 2, characterised in that the socket (18) is provided with a neck (22, 23) surrounding the wires, which is inserted though an orifice (25) in the base of the housing (10).

4. A working element as claimed in one of claims 1 to 3, characterised in that the socket (18) is provided with an annular flange (19) which is inserted in the housing (10) by a force fit.

5. A working element as claimed in one of claims 1 to 4, characterised in that the socket (18) is provided with a seat (21) on the side facing the base of the housing (10) for receiving a sealing ring (24).

6. A working element as claimed in one of claims 1 to 5, characterised in that the substrate (12) is of a plate design arranged centred relative to the socket (18).

7. A working element as claimed in one of claims 1 to 6, characterised in that the substrate consists of two or more elements, which are retained by means of the socket (18).

8. A working element as claimed in one of claims 1 to 7, characterised in that the resistance layer (3) is arranged in a meandering pattern on one side of the substrate (12).

## Revendications

1. Elément de travail thermostatique comportant un boîtier, dans lequel est disposé un élément de chauffage à résistance électrique, dont les fils électriques de raccordement ressortent extérieurement en traversant d'une manière étanche le fond du boîtier, caractérisé en ce que l'élément de chauffage à résistance (11) contient un corps de support (12), sur lequel est disposée une couche de chauffage résistif (13), sur laquelle sont fixés par brasage les fils de raccordement (16, 17), que sur le corps de support est formé par moulage, dans la zone des fils de raccordement, un socle (18) formé d'un matériau isolant et qui enveloppe les fils de raccordement et est disposé d'une manière étanche dans la zone du fond du boîtier (10), et qu'une masse d'étanchéité (26), qui étanchéifie le socle par rapport au boîtier, est insérée à l'intérieur du boîtier.

2. Elément de travail selon la revendication 1, caractérisé en ce que la masse d'étanchéité (26) recouvre également la zone du socle (18), dans laquelle le corps de support (12) ressort du socle.

3. Elément de travail selon la revendication 1 ou 2, caractérisé en ce que le socle (18) est équipé d'un appendice saillant (22, 23) entourant les fils de raccordement et qui traverse une ouverture (25) du fond du boîtier (10).

4. Elément de travail selon l'une des revendications 1 à 3, caractérisé en ce que le socle (18) comporte un collet annulaire (19) inséré selon un ajustement serré dans le boîtier (10).

5. Elément de travail selon l'une des revendications 1 à 4, caractérisé en ce que le socle (18) comporte, sur le côté tourné vers le fond du boîtier (10), un appui (21) servant à recevoir une bague d'étanchéité (24).

6. Elément de travail selon l'une des revendications 1 à 5, caractérisé en ce que le corps de support (12) possède la, forme d'une plaque disposée d'une manière centrée par rapport au socle (18).

7. Elément de travail selon l'une des revendications 1 à 6, caractérisé en ce que le corps de support est constitué par deux ou plus de deux éléments, qui sont retenus à l'aide du socle (18).

8. Elément de travail selon l'une des revendications 1 à 7, caractérisé en ce que la couche résistive (3) est disposé avec une forme sinueuse sur une face du corps de support (12).
